# EUROPEAN PATENT SPECIFICATION

(11) **EP 1 060 859 B1**
(45) Date of publication and mention of the grant of the patent: **02.01.2004**
(21) Application number: 00111639.1
(22) Date of filing: 31.05.2000
(51) Int. Cl.: B29C 44/12, A47C 7/18, B29C 44/14

(54) **Method for moulding seat tops or the like having a gel coating layer**
Verfahren zur Herstellung von Sitzauflagen oder dergleichen mit einer Gel-Überzuggsschicht
Procédé de moulage de coussins de sièges ou similaire garnis d'une couche de gel

(30) Priority: 07.06.1999 IT VI990116
(43) Date of publication of application: 20.12.2000
(73) Proprietor: DINICTA S.r.l., 31049 Valdobbiadene (TV) (IT)
(72) Inventor: Prompicai, Giovanni Giosuè, 31030 Altivole, TV (IT)
(74) Representative: Coppo, Alessandro

(56) References cited:
- EP-A- 0 181 604
- EP-A- 0 841 155
- US-A- 5 756 184
- US-A- 5 932 046

## Description

The present invention relates to a method for providing moulded elements, e.g. seat tops, wristrests, lying cushions or the like, having at least one coating layer of a compressible viscoelastic material or any other thermoplastic material, in particular gel, wherein said layer covers not only the element surface, but also the element edges.

The object of the present invention is to permit to use less gel than other known systems, thus providing a considerable saving of quite expensive material as well as a remarkably even colour on the whole element surface, independently of the element configuration.

This object is achieved by the method as defined in claim 1.

The following description will specifically relate to a method for providing gel coated seat tops, but obviously the same method can be validly applied also to other elements, such as cushions, wristrests or the like, being coated with other materials, without thereby departing from the scope of the invention.

Some elements, in particular seat tops or backs, bicycle saddles or the like have been recently presented on the market, said elements having a gel coating layer.

This material is highly appreciated for its peculiar softness and elasticity, which make it suitable for these specific uses, due to aesthetic reasons and because it provides good and cheap products.

The current methods employed to provide these elements, e.g. seat tops, comprise the steps of pouring gel directly into the final mould and then completing the process by injecting an expandable foam which gets bound on one side to the gel and on the other side to a possible shell or a rigid support.

A method for providing saddles with a gel layer is described in the Italian Patent No. 1.270.728.

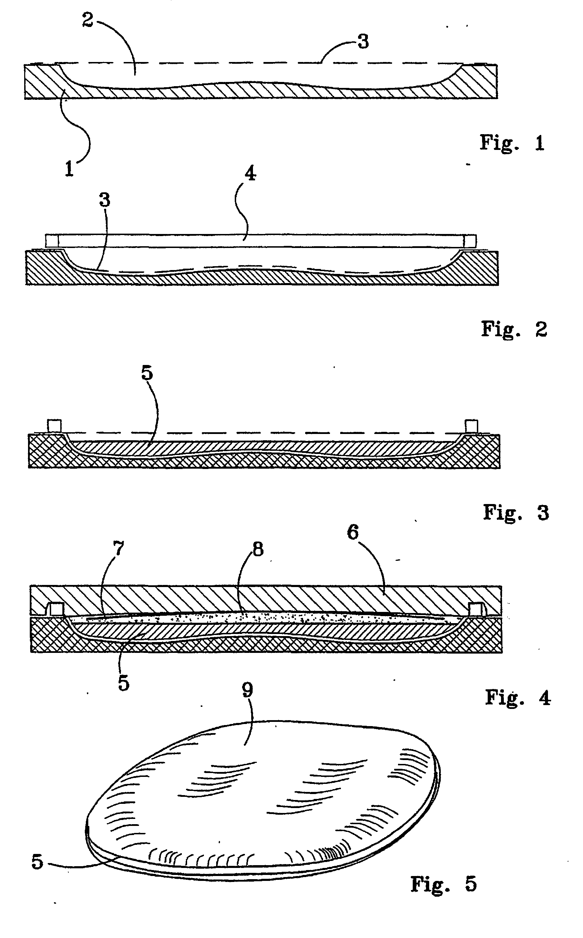

An example of a known method used to provide seat tops is illustrated with reference to figures from 1 to 5, in which figures from 1 to 4 are sectional views of a mould for providing a seat during the various process steps, whereas figure 5 is a perspective view of a seat top provided according to this known method.

In the drawings numeral 1 indicates the mould body in which a cavity 2 is provided the shape of which corresponds to the external upper surface of the finished product.

As known, a sheet 3 of a plastic material (figure 2) is placed on this mould and fastened by a frame 4 which runs along the periphery of the mould cavity; a certain amount of vacuum is applied through the mould bottom to deform the sheet so that the sheet perfectly fits in with the cavity shape. At this point (figure 3) a gel layer 5 is poured, after which the mould upper cover, to which a stiffening shell 7 is applied, is closed and a certain amount of expandable material 8, e.g. a polyurethane foam, is injected into the gap between the gel layer 5 and the head cup 6.

When polymerization has been completed, it is possible to take out the piece which looks as shown in figure 5, with a clean-cut boundary line between the gel layer and the layer of expanded material.

However, this system has some drawbacks, or at least it can be further improved.

As a matter of fact, pouring the gel directly into the final mould causes a considerable waste of material, since if for example the mould bottom is corrugated a gel layer is provided which is thicker adjacent to the mould cavity, which compels to use a larger amount of gel, which is much more expensive than the foam material.

Further, due to the different thickness of this gel layer also the element colour changes along the element surface, which is not always appreciated.

Finally, the separation layer between the gel and the foam material can be clearly seen on the edges, therefore a shell must be used which has raised edges to cover and hold the element along the sides.

All these drawbacks are now overcome by the method of the invention, which provides a finished element with a uniformly thick gel layer extending also along the edges.

An element is thus provided in which less gel is used, the coating colour is even along the whole surface and the gel layer covers also the element edges, thus avoiding the need of a shell with raised edges.

The present invention will now be described in detail, by way of non restrictive example, with reference to the accompanying drawings from 6 to 10 in which:
- figure 6 is a sectional view of a mould used to provide an initial manufactured article which is then used to provide a seat top;
- figure 7 is a sectional view of the manufactured article provided in this way;
- figures 8 and 9 are sectional views of a mould used to provide a top seat according to the invention during the two subsequent process steps;
- figure 10 is a perspective view of a seat top provided with the method of the invention.

With reference to the above mentioned drawings, in the first place the method of the invention provides a gel layer having a substantially uniform thickness, said layer being provided by pouring gel into a mould 10 having a uniformly deep cavity 11 and being larger than the finished element to be provided.

Preferably a thin plastic film 13 will be applied to this gel layer 12.

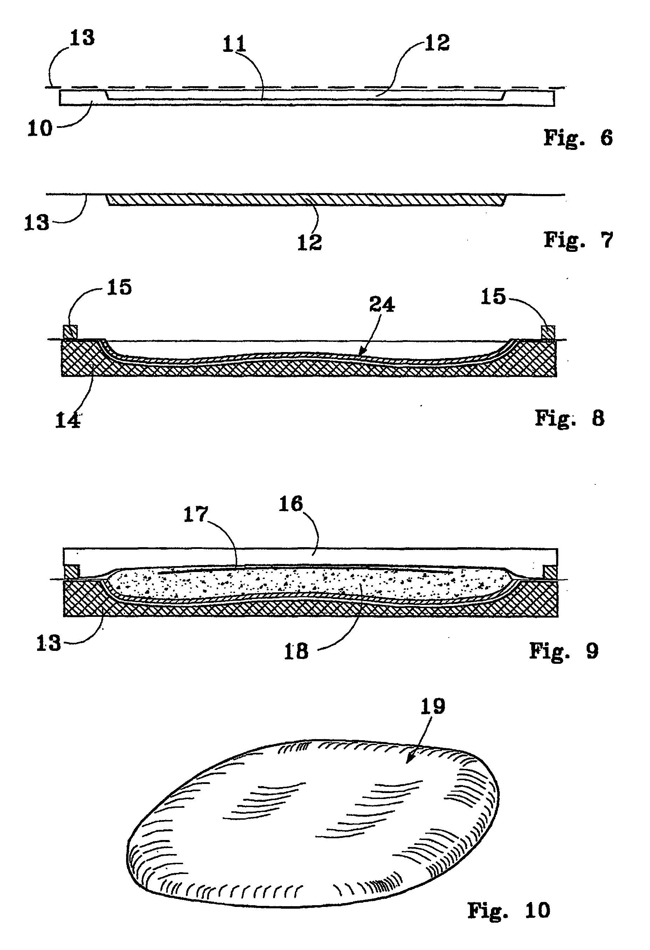

Once the gel has been fully polymerized, it can be taken out of the mould thus providing a gel layer 12 having a substantially uniform thickness and being provided with a sheet 13 of a thin and deformable plastic material, as shown in figure 7.

During the following step this gel layer 12 is placed into the final mould 14, having a cavity 24 the shape of which corresponds to the final shape of the seat to be provided.

The gel layer is held in its place by a frame 15 which is tightened around the edge of the plastic sheet 13, preferably at a certain distance from the cavity 24, to facilitate the subsequent deformation of the gel layer 12, said deformation being always carried out by drawing air in from the mould bottom so that the air pressure on the upper surface leads the layer 12 to fit exactly in with the surface of the mould bottom.

The fact that the layer 12 is larger than the mould 14 causes gel to be placed also along the mould side edges, so that the foam layer which is later injected is completely held inside gel.

During the following process step the mould is closed by a head cup 16 to which a stiffening shell 17 is applied and the foam material 18 is subsequently injected.

Once the layer 18 has hardened the mould can be opened and the finished product 19 of figure 10 is provided, said product having an even gel layer on the whole of its upper surface and its side edges.

Thus, as stated above, a seat top is provided having a gel coating which covers the whole seat top and edge, wherein this gel has a uniform thickness and, thence, also the seat colour on the whole of the seat surface is uniform.

Instead of gel, viscoelastic materials, thermoplastic materials or the like can be used.

Those skilled in the art can then provide several modifications and variations, all of which, however, fall within the scope of the present invention.

## Claims

1. Method for providing moulded elements having a viscoelastic or thermoplastic coating layer constituted by a gel coating layer (12), **characterised in that** it comprises the following steps:
- placing said gel coating layer (12) of a first uniformly thickness into a first mould (10), said first mould (10) having a surface which is larger than the surface of the moulded element to be provided;
- when polymerisation of the gel has been fully carried out, removing said gel coating layer (12) of a first uniformly thickness;
- placing said gel coating layer (12) of a first uniformly thickness into a second mould (14) having a surface which corresponds to the surface of the moulded element to be provided;
- deforming said gel coating layer (12), so that the gel coating layer (12) perfectly fits in with the shape of said second mould (14);
- closing said second mould (14) by means of a head cup (16);
- injecting a filling foam material (18) in the gap between said gel coating layer (12) and said head cup (16) .

2. Method for providing moulded elements as claimed in claim 1, **characterised in that** said first mould (10) has a uniformly deep cavity (11), in which said gel coating layer (12) is placed.

3. Method for providing moulded elements as claimed in claim 1, **characterised in that**, after having placed the gel coating layer (12) into said first mould (10), a thin plastic film (13) is applied to said gel coating layer (12).

4. Method for providing moulded elements as claimed in claim 3, **characterised in that**, after having placed said gel coating layer (12) into said second mould (14), said plastic film (13) is fastened along its edges at a prefixed distance from the edge of the second mould (14) .

5. Method for providing moulded elements as claimed in claim 1, **characterised in that** said deformation of the gel coating layer (12) is carried out by drawing air from the bottom of said second mould (14).

6. Method for providing moulded elements as claimed in claim 1, **characterised in that** a stiffening shell (17) is applied to said head cup (16) of the second mould (14) .

7. Moulded elements such as seat tops or the like having a gel coating layer (12) and being provided by the method according to claim 1.

## Patentansprüche

1. Verfahren zum Bereitstellen von in einer Form hergestellten Elementen mit einer viskoelastischen oder thermoplastischen Überzugsschicht, die durch eine Gelüberzugsschicht (12) gebildet ist, **dadurch gekennzeichnet, dass** es die folgenden Schritte umfasst:
- Anordnen der Gelüberzugsschicht (12) mit einer ersten gleichmäßigen Dicke in einer ersten Form (10), wobei die erste Form (10) eine Fläche aufweist, die größer als die Fläche des bereitzustellenden, in der Form hergestellten Elements ist;
- wenn eine Polymerisation des Gels vollständig ausgeführt worden ist, Entfernen der Gelüberzugsschicht (12) mit einer ersten gleichmäßigen Dicke;
- Anordnen der Gelüberzugsschicht (12) mit einer ersten gleichmäßigen Dicke in einer zweiten Form (14) mit einer Fläche, die der Fläche des bereitzustellenden, in der Form hergestellten Elements entspricht;
- Verformen der Gelüberzugsschicht (12), so dass die Gelüberzugsschicht (12) perfekt in die Form der zweiten Form (14) passt;
- Schließen der zweiten Form (14) mittels einer Oberschale (16);
- Einspritzen eines Füllschaummaterials (18) in den Spalt zwischen der Gelüberzugsschicht (12) und der Oberschale (16).

2. Verfahren zum Bereitstellen von in einer Form hergestellten Elementen nach Anspruch 1, **dadurch gekennzeichnet, dass** die erste Form (10) einen gleichmäßig tiefen Hohlraum (11) aufweist, in dem die Gelüberzugsschicht (12) angeordnet wird.

3. Verfahren zum Bereitstellen von in einer Form hergestellten Elementen nach Anspruch 1, **dadurch gekennzeichnet, dass**, nachdem die Gelüberzugsschicht (12) in der ersten Form (10) angeordnet worden ist, ein dünner Kunststofffilm (13) auf die Gelüberzugsschicht (12) aufgebracht wird.

4. Verfahren zum Bereitstellen von in einer Form hergestellten Elementen nach Anspruch 3, **dadurch gekennzeichnet, dass**, nachdem die Gelüberzugsschicht (12) in der zweiten Form ( 14) angeordnet worden ist, der Kunststofffilm (13) entlang seiner Ränder in einem zuvor festgelegten Abstand von dem Rand der zweiten Form (14) befestigt wird.

5. Verfahren zum Bereitstellen von in einer Form hergestellten Elementen nach Anspruch 1, **dadurch gekennzeichnet dass** die Verformung der Gelüberzugsschicht (12) ausgeführt wird, indem Luft von der Unterseite der zweiten Form (14) abgezogen wird.

6. Verfahren zum Bereitstellen von in einer Form hergestellten Elementen nach Anspruch 1, **dadurch gekennzeichnet, dass** eine Versteifungsschale (17) auf die Oberschale (16) der zweiten Form (14) aufgebracht wird.

7. In einer Form hergestellte Elemente, wie etwa Sitzauflagen oder dergleichen, mit einer Gelüberzugsschicht (12), die durch das Verfahren nach Anspruch 1 bereitgestellt werden.

## Revendications

1. Procédé d'obtention d'éléments moulés comportant une couche de revêtement viscoélastique ou thermoplastique constituée par une couche de revêtement de gel (12), **caractérisé en ce qu'**il comprend les étapes suivantes :
- placer ladite couche de revêtement de gel (12) d'une première épaisseur uniforme dans un premier moule (10), ledit premier moule (10) ayant une surface qui est supérieure à la surface de l'élément moulé devant être obtenu;
- lorsque la polymérisation du gel a été complètement effectuée, enlever ladite couche de revêtement de gel (12) d'une première épaisseur uniforme;
- placer ladite couche de revêtement de gel (12) d'une première épaisseur uniforme dans un second moule (14) ayant une surface qui correspond à la surface de l'élément moulé devant être obtenu;
- déformer ladite couche de revêtement de gel (12) de façon que la couche de revêtement de gel (12) épouse parfaitement la forme dudit second moule (14);
- fermer ledit second moule (14) au moyen d'une coupelle de tête (16);
- injecter un matériau de mousse de remplissage (18) dans l'espace libre entre ladite couche de revêtement de gel (12) et ladite coupelle de tête (16).

2. Procédé d'obtention d'éléments moulés selon la revendication 1, **caractérisé en ce que** ledit premier moule (10) présente une cavité de profondeur uniforme (11) dans laquelle est placée ladite couche de revêtement de gel (12).

3. Procédé d'obtention d'éléments moulés selon la revendication 1, **caractérisé en ce qu'**après avoir placé la couche de revêtement de gel (12) dans ledit premier moule (10), une mince pellicule plastique (13) est appliquée sur ladite couche de revêtement de gel (12).

4. Procédé d'obtention d'éléments moulés selon la revendication 3, **caractérisé en ce qu'**après avoir placé ladite couche de revêtement de gel (12) dans ledit second moule (14), ladite pellicule plastique (13) est fixée le long de ses bords à une distance prédéterminée du bord du second moule (14).

5. Procédé d'obtention d'éléments moulés selon la revendication 1, **caractérisé en ce que** ladite déformation de la couche de revêtement de gel (12) est réalisée en aspirant l'air du fond dudit second moule (14).

6. Procédé d'obtention d'éléments moulés selon la revendication 1, **caractérisé en ce qu'**une coquille de renforcement (17) est appliquée sur ladite coupelle de tête (16) du second moule (14).

7. Eléments moulés tels que des dessus de siège ou analogues comportant une couche de revêtement de gel (12) et étant obtenus par le procédé selon la revendication 1.
